# EUROPÄISCHE PATENTANMELDUNG

(11) **EP 2 221 943 A1**
(43) Veröffentlichungstag der Anmeldung: **25.08.2010**
(21) Anmeldenummer: 09153424.8
(22) Anmeldetag: 23.02.2009
(51) Int. Cl.: H02J 9/00

(54) **Stromsparvorrichtung zur Verwendung in einem stromverbrauchenden Gerät, Gerät mit einer solchen Vorrichtung und Verfahren zum stromsparenden Betreiben solcher Geräte**

(71) Anmelder: SE Lightmanagement AG, 8957 Spreitenbach (CH)
(72) Erfinder: Fritschi, Markus, 5742, Kölliken (CH)
(74) Vertreter: OK pat AG

(57) **Zusammenfassung**

Es geht um ein Gerät (20) mit einem Netzspannungsanschluss (21) und mit einer Kommunikationsschnittstelle (22). Das Gerät (20) ist in einem Normalmodus und in einem Stromsparmodus betreibbar und weist eine Stromsparvorrichtung (10) auf. Diese Stromsparvorrichtung (10) umfasst einen Energiespeicher (11), der mit der Kommunikationsschnittstelle (22) in Verbindung (24) steht, um die Kommunikationsschnittstelle (22) im Stromsparmodus autark mit Energie aus dem Energiespeicher (11) zu versorgen. Ausserdem umfasst sie eine Überwachungsschaltung (12) zur Überwachung des Ladungszustandes des Energiespeichers (11) und ein Schaltelement (13), das im Bereich des Netzspannungsanschlusses (21) des Geräts (20) so angeordnet ist, dass eine Verbindung des Geräts (20) zur Netzspannung mittels des Schaltelements (13) trennbar ist. Im Stromsparmodus ist das Gerät (20) durch das Schaltelement (13) vom Netzspannungsanschluss (21) getrennt und eine Empfangsfunktion der Kommunikationsschnittstelle (22) wird durch die Versorgung der Kommunikationsschnittstelle (22) mit Energie aus dem Energiespeicher (11) aufrecht erhalten.

## Beschreibung

Die vorliegende Erfindung bezieht sich auf elektrische Geräte, die Strom aus einem Netzanschluss verbrauchen. Insbesondere geht es um Stromsparvorrichtung zur Verwendung in einem stromverbrauchenden Gerät, um Geräte mit einer solchen Vorrichtung und Verfahren zum stromsparenden Betreiben solcher Geräte.

Es gibt zahlreiche Geräte, die mit einem Netzanschluss versehen sind, um im Normalbetrieb Energie aus dem Spannungsnetz zu ziehen. Häufig sind solche netzspannungsbetriebenen Geräte, wie sie im Folgenden genannt werden, mit einer sogenannten Stromspar- oder Standby-Schaltung ausgestattet. Diese Schaltung erlaubt es bei Nichtgebrauch das Netzgerät in einen Stromsparzustand zu überführen. Leider gibt es aber auch im Stromsparzustand einen Stromverbrauch, der nicht ganz unbeträchtlich ist. Das liegt daran, dass die Schaltung auch im Stromsparzustand in einem Wachzustand gehalten werden muss, damit auf ein Schaltsignal von aussen, das zum Beispiel von einer Fernbedienung oder einem Bussystem kommt, die Schaltung das Netzgerät wieder "aufwecken" und in den Normalbetrieb überführen kann. Die erforderliche permanente Speisung der Schaltung im Stromsparzustand erfolgt bisher über ein Netzteil, das am Wechselspannungsnetz hängt. Eine solche Versorgung über ein Wechselspannungsnetzteil verbraucht daher stets einen gewissen Strom. Solche Netzgeräte brauchen im Stromsparzustand typischerweise 0,5 bis 1 Watt Leistung. Teilweise wird im Standby Zustand sogar mehr Energie verbraucht.

Der Stromverbrauch von heutigen netzspannungsbetriebenen Geräten ist nicht tolerierbar und es besteht daher seit langem der Bedarf eine Lösung zu finden, die bei gleicher Funktionalität weniger Strom verbraucht.

Es ist daher eine Aufgabe der Erfindung eine Stromsparvorrichtung für netzspannungsbetriebene Geräte zu entwickeln, die weniger Strom verbraucht als herkömmliche netzspannungsbetriebene Geräte mit Stromspar- oder Standby-Schaltung.

Es ist eine weitere Aufgabe der Erfindung entsprechende netzspannungsbetriebene Geräte mit einer Stromsparvorrichtung bereit zu stellen, die weniger Strom verbrauchen als herkömmliche netzspannungsbetriebene Geräte mit Stromspar- oder Standby-Schaltung.

Ausserdem ist es eine Aufgabe der Erfindung ein entsprechendes Verfahren bereit zu stellen.

Die erfindungsgemässe Stromsparvorrichtung ist speziell zur Verwendung in einem stromverbrauchenden Gerät mit Netzspannungsanschluss und Kommunikationsschnittstelle ausgelegt, das in einem Normalmodus und in einem Stromsparmodus betreibbar ist. Die erfindungsgemässe Stromsparvorrichtung umfasst einen Energiespeicher, der mit der Kommunikationsschnittstelle in Verbindung steht, um die Kommunikationsschnittstelle im Stromsparmodus mit Energie aus dem Energiespeicher zu versorgen. Ausserdem weist die Stormsparvorrichtung eine Überwachungsschaltung zur Überwachung des Ladungszustandes des Energiespeichers und ein Schaltelement auf, das im Bereich des Netzspannungsanschlusses des Geräts so angeordnet ist, dass die Verbindung des Geräts zur Netzspannung mittels des Schaltelements trennbar ist.

Ein erfindungsgemässes Gerät weist einen Netzspannungsanschluss und eine Kommunikationsschnittstelle auf und es kann in einem Normalmodus und in einem Stromsparmodus betrieben werden. Das Gerät umfasst weiterhin eine Stromsparvorrichtung mit einem Energiespeicher, der mit der Kommunikationsschnittstelle in Verbindung steht, um die Kommunikationsschnittstelle im Stromsparmodus mit Energie aus dem Energiespeicher zu versorgen. Ausserdem umfasst die Stromsparvorrichtung eine Überwachungsschaltung zur Überwachung des Ladungszustandes des Energiespeichers und ein Schaltelement, das im Bereich des Netzspannungsanschlusses des Geräts so angeordnet ist, dass die Verbindung des Geräts zur Netzspannung mittels des Schaltelements trennbar ist. Das Gerät ist im Stromsparmodus durch das Schaltelement vom Netzspannungsanschluss getrennt und eine Empfangsfunktion der Kommunikationsschnittstelle wird durch die Versorgung der Kommunikationsschnittstelle mit Energie aus dem Energiespeicher aufrecht erhalten.

Ein erfindungsgemässes Verfahren zum Betreiben eines stromverbrauchenden Geräts, das einen Netzspannungsanschluss und eine Kommunikationsschnittstelle aufweist, zeichnet sich durch die folgenden Schritte aus:
- Einleiten eines Wechsels von einem Normalmodus, in welchem das Gerät über den Netzspannungsanschluss mit Netzspannung versorgt wird, in einen Stromsparmodus, indem mittels eines Schaltelements, das im Bereich des Netzspannungsanschlusses des Geräts angeordnet ist, die Verbindung des Geräts zur Netzspannung aufgetrennt wird,
- autarkes Versorgen der Kommunikationsschnittstelle mit Energie aus einem Energiespeicher, der in dem Gerät angeordnet ist,
- Überwachen des Ladungszustandes des Energiespeichers.

Besonders vorteilhafte Ausführungsformen sind den verschiedenen abhängigen Ansprüchen zu entnehmen. Die verschiedensten Vorteile werden in der detaillierten Beschreibung erwähnt.

Die Erfindung ist im Folgenden anhand in den Zeichnungen dargestellter Ausführungsbeispiele ausführlich beschrieben. Es zeigen:
- Fig. 1: eine schematische Abbildung eines ersten Geräts gemäss Erfindung;
- Fig. 2: eine schematische Abbildung eines zweiten Geräts gemäss Erfindung;
- Fig. 3A: ein schematisches Blockdiagram eines ersten konventionellen Vorschaltgeräts;
- Fig. 3B: ein weiteres Blockdiagram des ersten konventionellen Vorschaltgeräts nach Fig. 3A;
- Fig. 4: eine schematische Abbildung eines dritten Geräts gemäss Erfindung.

### Detaillierte Beschreibung:

Im Folgenden wird die Erfindung anhand von Ausführungsbeispielen erläutert. Der Einfachheit halber werden in den Figuren und der Beschreibung dieselben Bezugszeichen für gleiche oder gleichartige Bauelemente und Komponenten verwendet.

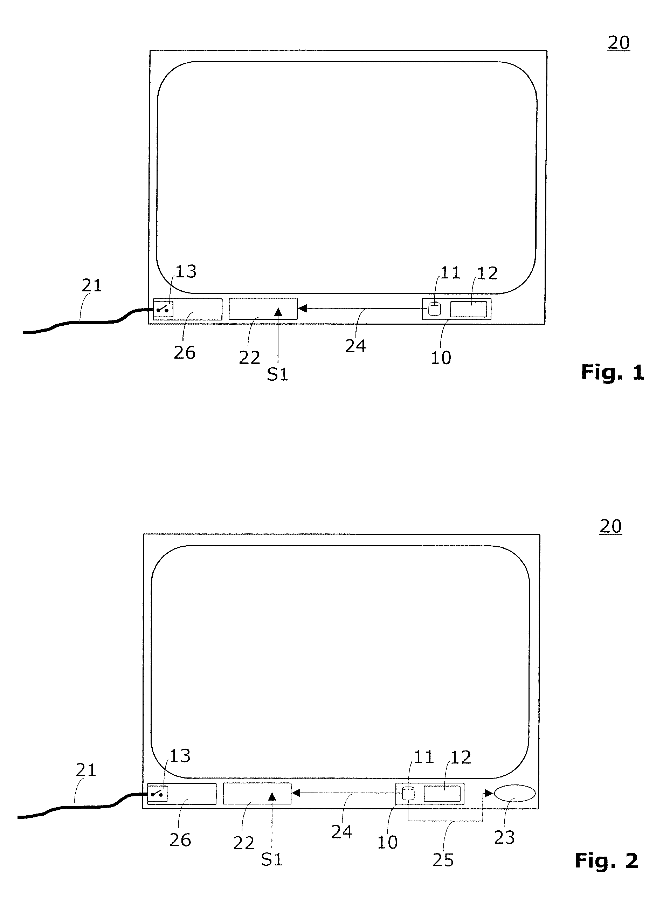

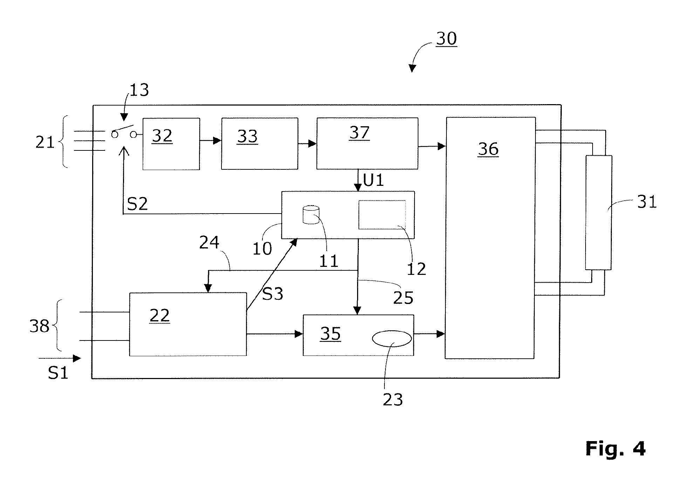

Der Begriff netzspannungsbetriebenes Gerät 20 wird hier für Geräte verwendet, die an ein Wechselspannungsnetz, zum Beispiel ein 110V, 220V oder 230V Netz, angeschlossen sind. Die Erfindung eignet sich besonders zum Einsatz in folgenden netzspannungsbetriebenen Geräten 20, die hier in einer nicht abschliessenden Liste aufgeführt sind:
- Fernseher (siehe z.B. Fig. 1 und 2),
- Sat-Receiver
- Monitore,
- Computer,
- Stereoanlagen,
- Elektronische Vorschaltgeräte (siehe z.B. Fig. 4) für Lampen oder andere Verbraucher,
- Drucker und andere Peripheriegeräte,
- Telefone und Telefonanlagen,
- Küchengeräte,
- Kaffeemaschinen,
- Getränkeautomaten,
- usw.

In Fig. 1 ist ein netzspannungsbetriebenes Gerät 20 mit einem Netzspannungsanschluss 21 und mit einer Kommunikationsschnittstelle 22 gezeigt. Es handelt sich bei dem Gerät 20 um einen Fernseher oder um einen Monitor. Die einzelnen Elemente der Erfindung werden hier nur schematisch als Funktionsblöcke dargestellt. Das gezeigte Gerät 20 kann in einem Normalmodus und in einem Stromsparmodus betrieben werden. Es umfasst eine Stromsparvorrichtung 10 mit einem Energiespeicher 11, der mit der Kommunikationsschnittstelle 22 in Verbindung steht, um die Kommunikationsschnittstelle 22 im Stromsparmodus autark mit Energie aus dem Energiespeicher 11 zu versorgen. Die entsprechende Verbindung ist in Fig. 1 rein schematisch durch einen Pfeil 24 angedeutet. Es ist eine Überwachungsschaltung 12 zur Überwachung des Ladungszustandes des Energiespeichers 11 vorgesehen. Mit einem Schaltelement 13, das im Bereich des Netzspannungsanschlusses 21 des Geräts 20 so angeordnet ist, dass die Verbindung des Geräts 20 zur Netzspannung mittels des Schaltelements 13 trennbar ist, kann die Netzverbindung im Stromsparmodus komplett getrennt werden. Während das Gerät 20 im Stromsparmodus durch das Schaltelement 13 vom Netzspannungsanschluss 21 getrennt ist, wird eine Empfangsfunktion der Kommunikationsschnittstelle 22 durch die Versorgung der Kommunikationsschnittstelle 22 mit Energie aus dem Energiespeicher 11 aufrecht erhalten. In diesem Stromsparmodus ist das Gerät 20 also (netz-) autark.

Bei Bedarf kann das Gerät 20 durch ein von aussen angelegtes Schaltsignal S1 (in Fig. 1 durch einen Pfeil angedeutet) vom Stromsparzustand in den Normalzustand überführt werden. Beim Eingehen eines Schaltsignals S1, das die Kommunikationsschnittstelle 22 empfangen und verarbeiten kann, weil sie autark vom Energiespeicher 11 gespeist wird, wird über das Schaltelement 13 eine Netzspannungsverbindung aufgebaut, um andere Funktionen des Geräts 20 anschalten, zuschalten oder hochfahren zu können.

Wenn das Gerät 20 nun wieder aus dem Spannungsnetz über den Netzspannungsanschluss 21 gespeist wird, kann der Energiespeicher 11 mit Energie nachgeladen werden, um für die nächste Periode des Stromsparzustandes ausreichend Energie zu enthalten.

Da es vorkommen kann, dass das Gerät 20 für eine längere Zeit im Stromsparzustand bleibt und daher die autarke Energiezufuhr aus dem Energiespeicher 11 eventuell nicht ausreicht, kann eine der folgenden Funktionen in der Stromsparvorrichtung 10 oder dem Gerät 20 implementiert sein.

1. Funktion: entweder kann die Überwachungsschaltung 12 so ausgelegt sein, dass sie es zulässt, dass die verfügbare Energie im Energiespeicher 11 unter einen Schwellenwert (Ladungsschwelle) sinkt. Wenn dies der Fall ist, dann reicht die Energie des Energiespeichers 11 eventuell nicht mehr aus, um eine Empfangsfunktion der Kommunikationsschnittstelle 22 im Stromsparmodus aufrecht zu erhalten. In diesem Fall wäre ein Fernbedienen oder Schalten (Aufwecken) mittels eines Schaltsignals 11 von aussen nicht mehr möglich. Das Gerät 20 kann aber so ausgelegt sein, dass zum Beispiel durch das Betätigen des Netzschalters (Aus- und Anschalten), oder durch das Betätigen eines Netztasters, das Gerät 20 bei Bedarf in den Normalzustand geschaltet wird. In diesem Normalzustand kann dann der Energiespeicher 11 mit Energie nachgeladen werden.

2. Funktion: wenn die Überwachungsschaltung 12 so ausgelegt ist, dass sie es zulässt, dass die verfügbare Energie im Energiespeicher 11 unter einen Schwellenwert (Ladungsschwelle) sinken kann, dann kann das Gerät 20 so ausgelegt sein, dass es von Zeit zu Zeit (zum Beispiel ausgelöst durch einen Zeitschalter ), mit der Netzspannung versorgt wird. In diesem Zustand kann dann der Energiespeicher 11 mit Energie nachgeladen werden. Bei der 2. Funktion muss aber nicht dass gesamte Gerät 20 angeschaltet oder hochgefahren werden, sondern es reicht, wenn das Gerät 20 vorübergehend selbstständig in einen Sonderzustand zum Nachladen des Energiespeichers geht. Ein Gerät 20, das mit der 2. Funktion ausgestattet ist, verbraucht aber im Durchschnitt mehr Energie als ein Gerät 20, das nur die 1. Funktion anbietet.

3. Funktion: wenn die Überwachungsschaltung 12 so ausgelegt ist, dass sie prüft, ob die verfügbare Energie im Energiespeicher 11 unter einen Schwellenwert (Ladungsschwelle) sinkt, so kann in diesem Moment ein automatisches (ohne manuelle Intervention) Anschalten des Geräts 20 erfolgen. Das automatische Anschalten des Geräts 20 kann entweder komplett erfolgen, oder das Gerät 20 kann vorübergehend selbstständig in einen Sonderzustand zum Nachladen des Energiespeichers gehen.

Netzspannungsbetriebene Geräte 20 weisen häufig einen Prozessor 23 auf, wie anhand des Beispiels in Fig. 2 angedeutet. Vorzugsweise steht gemäss einer weiteren Ausführungsform auch der Prozessor 23 des Geräts 20 mit dem Energiespeicher 11 in Verbindung, um den Prozessor 23 im Stromsparmodus mit Energie aus dem Energiespeicher 11 zu versorgen. Die entsprechende Verbindung ist hier rein schematisch durch den Pfeil 25 angedeutet. Häufig steht die Kommunikationsschnittstelle 22 im Stromsparmodus mit dem Prozessor 23 in Verbindung, um gemeinsam zum Beispiel anhand eines hinterlegten Protokolls einen eingehenden Schaltbefehl S1 empfangen und bearbeiten zu können.

Besonders bevorzugt ist eine Ausführungsform der Erfindung, bei welcher die Überwachungsschaltung 12 in einen Prozessor (z.B. den Prozessor 23) des Geräts 20 integriert ist, oder bei welcher der Prozessor gewisse Funktionen der Überwachungsschaltung 12 übernimmt oder kontrolliert.

Die Stromsparvorrichtung 10 kann als Nachrüstsatz zum Nachrüsten existierender Geräte 20 ausgelegt sein, oder die Stromsparvorrichtung 10 kann ab Werk fest in ein Gerät 20 integriert sein. Im letzteren Fall sind unter Umständen die einzelnen Bestandteile der Erfindung nicht als dedizierte Bauteile ausgeführt. Die Funktion dieser Bauteile oder Elemente kann in diesem Fall in andere Komponenten des Geräts integriert sein.

Vorzugsweise kommt als Energiespeicher 11 ein Superkondensator oder ein Akku zum Einsatz.

Vorzugsweise umfasst die Überwachungsschaltung 12 und/oder ein Netzteil 26 (siehe Fig. 1 oder Fig. 2) des Geräts 20 eine Schaltung zur Ladungsregelung, um den Energiespeicher 11 kontrolliert aufladen zu können.

Ein stromverbrauchendes Gerät 20 wird zum Beispiel nach dem folgenden Verfahren betrieben:
a. Einleiten eines Wechsels von einem Normalmodus, in welchem das Gerät 20 über den Netzspannungsanschluss 21 mit Netzspannung versorgt wird, in einen Stromsparmodus, indem mittels eines Schaltelements 13, das im Bereich des Netzspannungsanschlusses 21 des Geräts 20 angeordnet ist, die Verbindung des Geräts 20 zur Netzspannung aufgetrennt wird;
b. autarkes Versorgen (im Stromsparmodus) der Kommunikationsschnittstelle 22 mit Energie aus einem Energiespeicher 11, der in dem Gerät (20) angeordnet ist;
c. Überwachen des Ladungszustandes des Energiespeichers 11.

Durch das Überwachen kann ermittelt werden, ob eine Ladungsschwelle des Energiespeichers 11 unterschritten wird, wobei dann automatisch eine oder mehrere der Funktionen 1 bis 3 ausgelöst werden können.

Besonders bevorzugt ist eine Ausführungsform, bei der beim Unterschreiten der Ladungsschwelle des Energiespeichers 11 mittels des Schaltelements 13 die Verbindung des Geräts 20 zur Netzspannung selbstständig und temporär aufgebaut wird, um dann den Energiespeicher 11 durch die an dem Gerät 20 anliegende Netzspannung (im Normalzustand oder im Sonderzustand), aufladen zu können.

Das Einleiten eines Wechsels vom Normalzustand in den Stromsparzustand oder umgekehrt kann ausgelöst werden durch ein Schaltsignal S1, dass von aussen über die Kommunikationsschnittstelle 22 an das Gerät 20 übermittelt wurde.

Nach einem Wechsel von dem Stromsparmodus in den Normalmodus wird der Energiespeicher 11 vorzugsweise unmittelbar über die im Normalmodus an dem Gerät 20 anliegende Netzspannung aufgeladen.

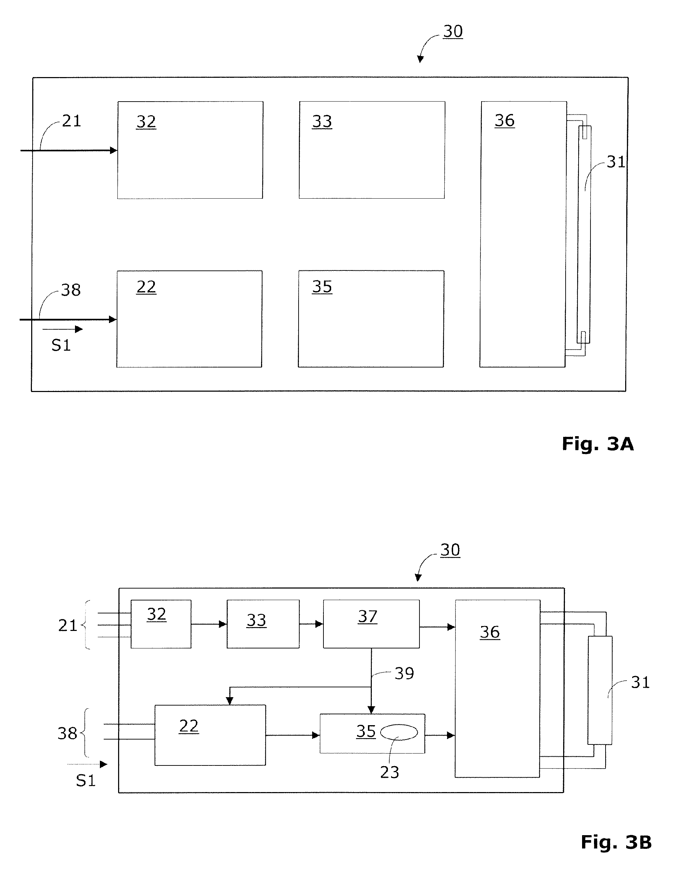

Im Zusammenhang mit den Figuren 3A und 3B wird nun konventionelles Vorschaltgerät 30 näher erläutert. Es handelt sich um eine Vorrichtung 30 zum Ansteuern einer Leuchtstofflampe 31. Die Vorrichtung 30 umfasst eine Leistungselektronik 36 mit einer Heizendstufe und einer Röhrenendstufe für das Zünden und Brennen der Leuchtstofflampe 31. Die beiden genannten Endstufen sind nicht in Fig. 3A und Fig. 3B zu erkennen. Weiterhin ist eine digitale Steuerung 35 zur Ansteuerung der Leistungselektronik 36 vorgesehen, wobei die digitale Steuerung 35 analoge und/oder digitale Steuersignale bereitstellt, um die Leistungselektronik 36 zu beeinflussen. Die Leistungselektronik 36 generiert alle für den Betrieb der Leuchtstoffröhre 31 notwendigen Spannungen und Signale. In der Leistungselektronik 36 wird Hochspannung erzeugt, die zum Zünden der Leuchtstoffröhre 31 notwendig ist. Ausserdem stellt die Leistungselektronik 36 den Heizstrom zur Verfügung, der die beiden Glühwendeln der Leuchtstoffröhre 31 auf der richtigen Temperatur hält.

Eingangsseitig kann ein Netzfilter 32 vorgesehen sein, um die Vorrichtung 30 mit einem Spannungsnetz 21 (z.B. 230V / 50Hz oder 110V / 60Hz) zu verbinden. Der Netzfilter 32 kann für eine EMV Filterung (Elektromagnetische Verträglichkeit) sorgen. Wird eine Power Factor Correction (PFC) 37 vorgesehen (siehe Fig. 3B), so kann die Vorrichtung 30 als nahezu rein ohmsche Last vom Netz 21 aus betrachtet werden. Es kann weiterhin ein Gleichrichter 33 vorgesehen sein, der die vom Netz 21 aufgenommene Energie gleichrichtet, um Gleichspannung einem Teil der Komponenten zur Verfügung zu stellen.

Weiterhin kann ein Datenempfänger 22 (Kommunikationsschnittstelle) vorgesehen sein, wie in Fig. 3A und 3B angedeutet. Die Kommunikationsschnittstelle 22 empfängt digitale Daten oder analoge Signale über eine Leitung oder Verbindung 38, durch die zum Beispiel die gewünschte Helligkeit von aussen vorgegeben werden kann. Die Kommunikationsschnittstelle 22 kann auch Schaltsignale S1 empfangen. Zum Übertragen der Daten kann ein beliebiges Protokoll oder Format verwendet werden: z.B. DMX (digitales Steuerprotokoll, das in der Bühnen- und Veranstaltungstechnik zur Steuerung von Dimmern angewandt wird), DSI/DALI (DSI = Digital System; DALI = Digital Adressable Light Interface = Digitale adressierbare Beleuchtungsschnittstelle) für die Haustechnik und Architektur, um einige Beispiele zu geben. Die Steuerung 35 ist das Herzstück der Vorrichtung 30, wie weiter oben bereits erwähnt.

Weitere Details einer solchen Vorrichtung 30 sind der Fig. 3B zu entnehmen. In dieser Darstellung ist zu erkennen, dass die Speisung der Steuerung 35, respektive des Prozessors 23 der Steuerung 35, und die Speisung der Kommunikationsschnittstelle 22 über die Verbindung 39 erfolgt.

Auch wenn der Stromverbrauch für die Kommunikationsschnittstelle 22 und den Prozessor 23 der Steuerung 35 zusammen nur 2 mA beträgt, so ergibt dies total bei einer Netzspannung am Netzspannungsanschluss 21 von 230 VAC bereits eine Leistungsaufnahme von 0,46 W. Falls der Prozessor 23 und die Kommunikationsschnittstelle 22 mit 5V Gleichspannung arbeiten, die über die Verbindung 39 zur Verfügung gestellt wird, so werden 2 mA * 5 V= 10 mW für diese beiden Komponenten 22, 23 an direkter Leistung benötigt. Die Verluste, um diese 10 mW bereit zu stellen, betragen 450 mW (0,46 W - 10 mW). Der Wirkungsgrad einer solchen konventionellen Vorrichtung 30, die als Vorschaltgerät für eine Leuchtstofflampe 31 dient, beträgt also nur ca. 2.2%.

Anhand von Fig. 4 ist nun gezeigt, wie die Erfindung auf eine solche Vorrichtung 30 angewendet werden kann, um die Leistungsaufnahme im Standby Zustand deutlich zu reduzieren. Die Vorrichtung 30 umfasst in der gezeigten Ausführungsform eine Stromsparvorrichtung 10 mit einem Energiespeicher 11 und einer Überwachungsschaltung 12. Weiterhin kommt ein Schaltelement 13 zum Einsatz, das im Bereich des Netzspannungsanschlusses 21 für eine Trennung vom Spannungsnetz sorgt. Die Stromsparvorrichtung 10 wird bei Bedarf mit Gleichspannung U1 gespeist, um den Energiespeicher 11 aufladen zu können. Dies geschieht dann, wenn die Vorrichtung 30 vom Netz 21 gespeist wird (d.h. im Normalmodus) und vorzugsweise nur dann, wenn der Energiespeicher 11 aufgeladen werden muss. Der Wechsel von dem Normalmodus, in welchem die Vorrichtung 30 und die angeschlossenen Leuchte 31 über den Netzspannungsanschluss 21 mit Netzspannung versorgt wird, in einen Stromsparmodus, wird mittels des Schaltelements 13 ausgeführt. Durch das Schaltelement 13 wird die Verbindung des Geräts 20 zur Netzspannung aufgetrennt. Das entsprechende Signal S2 kommt von der Stromsparvorrichtung 10.

Nachdem die Vorrichtung 30 in den Stromsparmodus überführt wurde, folgt eine Phase des (netz-)autarken Versorgens (im Stromsparmodus) der Kommunikationsschnittstelle 22 und des Prozessors 23 mit Energie aus dem Energiespeicher 11. Die Energieversorgung erfolgt über die Verbindungen 24 und 25, wie in Fig. 4 schematisch angedeutet. Im Stromsparmodus erfolgt auch das Überwachen des Ladungszustandes des Energiespeichers 11. Dieser Vorgang ist nicht in Fig. 4 gezeigt, wird aber vorzugsweise in der Stromsparvorrichtung 10 implementiert, oder durch den Prozessor 23 kontrolliert, bzw. ausgeführt.

Bei Bedarf kann die Vorrichtung 30 durch ein von aussen angelegtes Schaltsignal S1 (in Fig. 4 durch einen Pfeil angedeutet) vom Stromsparzustand in den Normalzustand überführt werden. Beim Eingehen eines Schaltsignals S1, das die Kommunikationsschnittstelle 22 empfangen und verarbeiten kann, weil sie autark vom Energiespeicher 11 gespeist wird, wird über das Schaltelement 13 eine Netzverbindung aufgebaut, um andere Funktionen des Geräts 20 anschalten, zuschalten oder hochfahren zu können. Die Übergabe eines internen Schaltsignals S3 von der Kommunikationsschnittstelle 22 an die Stromsparvorrichtung 10 ist in Fig. 4 durch einen Verbindungspfeil S3 angedeutet.

Wenn man nun der Einfachheit halber davon ausgeht, dass der Prozessor den Strom I1 und die Kommunikationsschnittstelle 22 den Strom I2 aufnehmen, mit I1 + I2 = 2 mA, während sich die Vorrichtung 30 im Stromsparmodus befindet, und wenn man hier eine Gleichspannungsversorgung dieser Komponenten 22 und 23 mit 5 V annimmt, so werden 2 mA * 5 V = 10 mW für diese beiden Komponenten 22 und 23 an direkter Leistung im Stromsparmodus benötigt. Die entsprechende Energiemenge wird aus dem Energiespeicher 11 zur Verfügung gestellt.

Wenn die als elektronisches Vorschaltgerät dienende Vorrichtung 30 über die Kommunikationsschnittstelle 22 in den standby Modus geschaltet wird, so trennt die Stromsparvorrichtung 10 die Leuchte 31 samt Vorrichtung 30 vom Netz 21. Der Strom für die Kommunikationsschnittstelle 22 und den Prozessor 23 wird aus dem Energiespeicher 11 zur Verfügung gestellt, wie beschrieben. Wenn hier ein Akku als Energiespeicher 11 eingesetzt wird, der eine Akkuleistung (Ladungsmenge) von 1000 mAh hat, dann kann bei dem Stromverbrauch von 2 mA eine Zeit von 500 h (= 20 Tagen) überbrückt werden, ohne dass die Vorrichtung 30 an das Spannungsnetz 21 gehen müsste. Wenn nur drei Tage mit der Stromsparvorrichtung 10 überbrückt werden müssen, dann würde auch ein Akku als Energiespeicher 11 ausreichen, der eine Akkuleistung von 150 mAh hat.

Der Wirkungsgrad liegt nun bei einer Vorrichtung 30 nach Fig. 4 während des standby Betriebs bei > 90%. Es werden im Stromsparmodus nur wenige mW benötigt. Wenn das Gerät 20 (umfassend eine Vorrichtung 30 und z.B. eine Leuchte 31) in Betrieb ist, werden sowieso auch tiefere Spannungen für den Betrieb des Geräts 20 benötigt. Diese tieferen Spannungen werden mit einem Schaltnetzteil oder Trafo erzeugt. Wenn der Leistungsverbrauch im Betrieb über einigen Watt liegt, werden die Speisungen effizienter. Ein Schaltnetzteil mit über 10 Watt hat z.B. einen Wirkungsgrad > 90%. Wenn man den Energiespeicher 11 mit diesem Netzteil wieder auflädt, so ergibt sich insgesamt eine deutliche günstigere Energiebilanz.

Im Folgenden wird anhand eines Beispiels einer Gesamtenergiebilanz über eine Woche die Wirksamkeit der erfindungsgemässen Lösung erläutert.

Eine Leuchtstofflampe 31 mit einer 35W T5 Röhre ist mit einem modernen elektronischen Vorschaltgerät (= Vorrichtung 30 in Fig. 3A und 3B) ausgerüstet. Die Leuchtstofflampe 31 ist während 5 Tagen jeweils 6 h in Betrieb; zwei Tage pro Woche wird die Leuchtstofflampe 31 nicht benötigt.

Im Fall einer konventionellen Vorrichtung 30 (wie z.B. in Fig. 3A und 3B gezeigt), gelten folgende Annahmen:
Technische Daten:

| | | |
|---|---|---|
| - stand-by | 0,5 | W |
| - Betrieb (100%) | 40 | W |

| | |
|---|---|
| 18 h * 5 Tage + 24 h * 2 Tage | im standby Zustand (mit 0,5W Verbrauch) |
| = 138 h mit 0,5 W | → 69 Wh |
| 6 h * 5 Tage | im Normalbetrieb (mit 40 W Verbrauch) |
| = 30 h mit 40 Watt | → 1200 Wh |

Daraus ergibt sich ein Gesamtverbrauch von total 1269 Wh.

Im Fall einer erfindungsgemässen Vorrichtung 30 (wie z.B. in Fig. 4 gezeigt), gelten folgende Annahmen:
Technische Daten:

| | |
|---|---|
| - stand-by | 0.0 W (Stromsparfunktion ist aktiv) |
| - Betrieb (100%) | 40 W |
| - Betrieb mit gleich- | |
| zeitigem Nachladen des | |
| Energiespeichers 11 | 40,36 W |

Anmerkung: Für den Wirkungsgrad bei Akkubetrieb wurden 50% angesetzt, d.h. der Akku gibt die halbe Energiemenge ab, die geladen wurde. 5 V * 2 mA mit 50% Wirkungsgrad während 18 h = 5 V * 2mA * 2 * 18h = 360 mWh.

| | |
|---|---|
| 18 h * 5 Tage + 24 h * 2 Tage | im stand-by Zustand bei aktiver |
| | Stromsparfunktion (mit 0,0 W Verbrauch) |
| = 138 h mit 0 W | → 0 Wh |
| 6 h * 5 Tage im Normalbetrieb (mit 40W Verbrauch) | |
| = 30 h mit 40 Watt → 1200 Wh | |

plus Nachladen
5 Tage während 18 h 5V mit 2mA und 50% Wirkungsgrad plus
2 Tage während 24 h 5V mit 2mA und 50% Wirkungsgrad
5x0.36mWH + 2*0.48mWh = 2.76Wh

Daraus ergibt sich ein Gesamtverbrauch von total 1202,76 Wh.

In diesem Beispiel können pro Gerät 20und pro Woche 66,24 Wh (=1269 Wh - 1202,76 Wh) eingespart werden. Je weniger ein Gerät 20pro Tag und Woche eingeschaltet ist, desto besser rechnet sich die erfindungsgemässe Stromsparvorrichtung 10.

Wenn der Energiebedarf der konventionellen Standby-Schaltung nach Fig. 3A und 3B und der Standby-Schaltung mit Stromsparvorrichtung 10 nach Fig. 4 verglichen wird, so verbraucht das Gerät mit der konventionellen Standby-Schaltung 69 Wh in einer Woche, während für die 0-Watt Variante gemäss Erfindung lediglich 2,76 Wh für das Nachladen benötigt werden.

Wenn die standby Leistungsaufnahme eines konventionellen Geräts 20 höher ist als 1W oder mehr, so wird der Einsatz der erfindungsgemässen Stromsparvorrichtung 10 immer sinnvoller.

Eine Stromsparvorrichtung 10, oder ein Gerät 20 mit entsprechender Stromsparfunktion kann eine oder mehrere der folgenden Merkmale oder Optionen aufweisen:
- Der Energiespeicher 11 sollte für eine lange Lebensdauer möglichst nicht überladen werden. Daher kann die Stromsparvorrichtung 10 oder das Gerät 20 eine Ladestromunterbrechung vorsehen.
- Es gibt Energiespeicher 11, bei denen man die Ladespannung konstant halten sollte. Zu diesem Zweck kann die Stromsparvorrichtung 10 oder das Gerät 20 eine entsprechende Spannungsregelung vorsehen.
- Der Energiespeicher 11 sollte nicht zu stark entladen werden. Daher kann die Stromsparvorrichtung 10 oder das Gerät 20 so ausgelegt sein, das eine Ladeschaltung aktiviert wird, wenn der Ladungszustand unter eine Schwelle fällt.
- Je nach Ausführungsform der Erfindung sollte die Energie, die von der Stromsparvorrichtung 10 geliefert werden kann, möglichst noch genügen, um das Gerät 20 wieder zu aktivieren. Das Anschalten der Netzverbindung 21 zum rechtzeitigen Nachladen des Energiespeichers 11 kann zum Beispiel mit einem bistabilen Relais realisiert werden.
- Nach Wunsch kann eine Ausführungsform so ausgelegt werden, dass, falls der Energiespeicher 11 entladen ist und keine Ladeenergie zur Verfügung steht (z.B. weil das Gerät 20 lange Zeit am Lager war), der Ladevorgang sofort ausgelöst wird, nach dem eine Ladespannung zur Verfügung steht. Diese Funktion kann z.B. mit einem bistabilen Relais realisiert werden.

Optional kann ein Gerät 20 auch das Aktivieren des Netzteils ermöglichen, ohne das Gerät 20 richtig einzuschalten. Bei einem elektronischen Vorschaltgerät (Vorrichtung 30 nach Fig. 4 z.B.), kann die Leuchtstofflampe 31 dunkel bleiben, während der Energiespeicher 11 aber nachgeladen wird. Wenn der Energiespeicher 11 dann geladen ist, wird wieder ausgeschaltet. Diese Funktion kann zum Beispiel während der Ferienzeit zum Einsatz kommen.

Optional kann eine Stromsparvorrichtung 10 oder ein Gerät 20 so ausgelegt sein, dass während dem stand-by Betrieb auf der Netzseite beide Leiter (Phase und Nullleiter) abgeschaltet werden. In diesem Fall ist das Gerät 20 dann komplett vom Netz 21 getrennt. Es läuft dann autark im Stromsparmodus. Ein Netzfreischalter wird dadurch hinfällig.

**Bezugszeichen**

| | |
|---|---|
| Stromsparvorrichtung | 10 |
| Energiespeicher | 11 |
| Überwachungsschaltung | 12 |
| Schaltelement | 13 |
| | |
| Gerät (mit Netzanschluss) | 20 |
| Netzspannungsanschluss | 21 |
| Kommunikationsschnittstelle | 22 |
| Prozessor | 23 |
| Verbindung | 24 |
| Verbindung | 25 |
| Netzteil | 26 |
| | |
| Vorschaltgerät / Vorrichtung | 30 |
| Leuchtstofflampe | 31 |
| Netzfilter | 32 |
| Gleichrichter | 33 |
| | |
| digitale Steuerung | 35 |
| Leistungselektronik | 36 |
| Power Factor Correction (PFC) | 37 |
| Leitung, Verbindung, IR oder Funk | 38 |
| Verbindung | 39 |
| | |
| Schaltsignal | S1 |
| Signal | S2 |
| internes Schaltsignal | S3 |

## Patentansprüche

**1.** Stromsparvorrichtung (10) zur Verwendung in einem stromverbrauchenden Gerät (20) mit Netzspannungsanschluss (21) und Kommunikationsschnittstelle (22), das in einem Normalmodus und in einem Stromsparmodus betreibbar ist, **dadurch gekennzeichnet, dass** die Stromsparvorrichtung (10) aufweist:
- einen Energiespeicher (11), der mit der Kommunikationsschnittstelle (22) in Verbindung (24) steht, um die Kommunikationsschnittstelle (22) im Stromsparmodus mit Energie aus dem Energiespeicher (11) zu versorgen,
- eine Überwachungsschaltung (12) zur Überwachung des Ladungszustandes des Energiespeichers (11),
- einem Schaltelement (13), das im Bereich des Netzspannungsanschlusses (21) des Geräts (20) so angeordnet ist, dass eine Verbindung des Geräts (20) zur Netzspannung mittels des Schaltelements (13) trennbar ist.

**3.** Stromsparvorrichtung (10) nach Anspruch 1, **dadurch gekennzeichnet, dass** der Energiespeicher (11) auch mit einem Prozessor (23) des Geräts (20) in Verbindung (25) steht, um den Prozessor (23) im Stromsparmodus mit Energie aus dem Energiespeicher (11) zu versorgen.

**4.** Stromsparvorrichtung (10) nach Anspruch 1 oder 2, **dadurch gekennzeichnet, dass** die Überwachungsschaltung (12) so ausgelegt ist, dass bei Unterschreitung einer Ladungsschwelle des Energiespeichers (11) mittels des Schaltelements (13) die Verbindung des Geräts (20) zur Netzspannung aufbaubar ist, um den Energiespeicher (11) bei an dem Gerät (20) anliegender Netzspannung aufladen zu können.

**5.** Stromsparvorrichtung (10) nach Anspruch 2 oder 3, **dadurch gekennzeichnet, dass**, nach dem die Kommunikationsschnittstelle (22) ein Schaltsignal (S1) empfangen hat, das Gerät (20) in den Normalmodus übergeht, wobei die Überwachungsschaltung (12) so ausgelegt ist, dass in dem Normalmodus der Energiespeicher (11) mit der in dem Normalmodus an dem Gerät (20) anliegenden Netzspannung aufladbar ist.

**6.** Stromsparvorrichtung (10) nach einem der vorhergehenden Ansprüche, **dadurch gekennzeichnet, dass** die Überwachungsschaltung (12) in einen Prozessor (23) des Geräts (20) integriert ist.

**7.** Gerät (20) mit einem Netzspannungsanschluss (21) und mit einer Kommunikationsschnittstelle (22), wobei das Gerät (20) in einem Normalmodus und in einem Stromsparmodus betreibbar ist, **dadurch gekennzeichnet, dass** das Gerät (20) eine Stromsparvorrichtung (10) umfasst mit:
- einem Energiespeicher (11), der mit der Kommunikationsschnittstelle (22) in Verbindung (24) steht, um die Kommunikationsschnittstelle (22) im Stromsparmodus autark mit Energie aus dem Energiespeicher (11) zu versorgen,
- einer Überwachungsschaltung (12) zur Überwachung des Ladungszustandes des Energiespeichers (11),
- einem Schaltelement (13), das im Bereich des Netzspannungsanschlusses (21) des Geräts (20) so angeordnet ist, dass eine Verbindung des Geräts (20) zur Netzspannung mittels des Schaltelements (13) trennbar ist,
wobei das Gerät (20) im Stromsparmodus durch das Schaltelement (13) vom Netzspannungsanschluss (21) getrennt ist und eine Empfangsfunktion der Kommunikationsschnittstelle (22) durch die Versorgung der Kommunikationsschnittstelle (22) mit Energie aus dem Energiespeicher (11) aufrecht erhalten bleibt.

**8.** Gerät (20) nach Anspruch 7, **dadurch gekennzeichnet, dass** das Gerät (20) einen Prozessor (23) umfasst und dass der Energiespeicher (11) auch mit dem Prozessor (23) in Verbindung (25) steht, um den Prozessor (23) im Stromsparmodus mit Energie aus dem Energiespeicher (11) zu versorgen.

**9.** Gerät (20) nach Anspruch 7 oder 8, **dadurch gekennzeichnet, dass** die Überwachungsschaltung (12) so ausgelegt ist, dass bei Unterschreitung einer Ladungsschwelle des Energiespeichers (11) mittels des Schaltelements (13) die Verbindung des Geräts (20) zur Netzspannung aufbaubar ist, um den Energiespeicher (11) bei an dem Gerät (20) anliegender Netzspannung aufladen zu können.

**10.** Gerät (20) nach Anspruch 7 oder 8, **dadurch gekennzeichnet, dass**, nach dem die Kommunikationsschnittstelle (22) ein Schaltsignal (S1) empfangen hat, das Gerät (20) in den Normalmodus übergeht, wobei die Überwachungsschaltung (12) so ausgelegt ist, dass in dem Normalmodus der Energiespeicher (11) mit der in dem Normalmodus an dem Gerät (20) anliegenden Netzspannung aufladbar ist.

**11.** Gerät (20) nach Anspruch 7, **dadurch gekennzeichnet, dass** die Überwachungsschaltung (12) in den Prozessor (23) integriert ist oder von dem Prozessor (23) kontrolliert wird.

**12.** Gerät (20) nach einem der Ansprüche 7 bis 11, **dadurch gekennzeichnet, dass** das Gerät (20) in dem Stromsparmodus energetisch autark ist, wobei in diesem autarken Zustand keine Netzenergie von aussen über den Netzspannungsanschluss (21) aufgenommen wird.

**13.** Verfahren zum Betreiben eines stromverbrauchenden Geräts (20), das einen Netzspannungsanschluss (21) und eine Kommunikationsschnittstelle (22) aufweist, **gekennzeichnet durch** die folgenden Schritte:
a. Einleiten eines Wechsels von einem Normalmodus, in welchem das Gerät (20) über den Netzspannungsanschluss (21) mit Netzspannung versorgt wird, in einen Stromsparmodus, indem mittels eines Schaltelements (13), das im Bereich des Netzspannungsanschlusses (21) des Geräts (20) angeordnet ist, eine Verbindung des Geräts (20) zur Netzspannung aufgetrennt wird,
b. autarkes Versorgen der Kommunikationsschnittstelle (22) mit Energie aus einem Energiespeicher (11), der in dem Gerät (20) angeordnet ist,
c. Überwachen des Ladungszustandes des Energiespeichers (11).

**14.** Verfahren nach Anspruch 13, **dadurch gekennzeichnet, dass** beim Überwachen ermittelt wird, ob eine Ladungsschwelle des Energiespeichers (11) unterschritten wird, wobei
- beim Unterschreiten der Ladungsschwelle des Energiespeichers (11) mittels des Schaltelements (13) die Verbindung des Geräts (20) zur Netzspannung aufgebaut wird, und
- der Energiespeicher (11), bei an dem Gerät (20) anliegender Netzspannung, aufgeladen wird.

**15.** Verfahren nach Anspruch 12 oder 13, **dadurch gekennzeichnet, dass** das Einleiten eines Wechsels ausgelöst wird nachdem ein Schaltsignal (S1) von aussen über die Kommunikationsschnittstelle (22) an das Gerät (20) übermittelt wurde.

**16.** Verfahren nach Anspruch 12 oder 13, **dadurch gekennzeichnet, dass** nach einem Wechsel von dem Stromsparmodus in den Normalmodus der Energiespeicher (11) über die im Normalmodus an dem Gerät (20) anliegende Netzspannung aufgeladen wird.
